# EUROPEAN PATENT APPLICATION

(11) **EP 1 001 619 A1**
(43) Date of publication of application: **17.05.2000**
(21) Application number: 98402821.7
(22) Date of filing: 13.11.1998
(51) Int. Cl.: H04N 5/238, H04N 5/235

(54) **Iris for an imaging apparatus and imaging apparatus comprising such iris**

(71) Applicant: THOMSON multimedia, 92100 Boulogne Billancourt (FR)
(72) Inventor: Chikazawa, Yoshiharu, 92100 Boulogne-Billancourt (FR)
(74) Representative: Ruellan-Lemonnier, Brigitte

(57) **Abstract**

The invention concerns an iris for controlling the amount of light in an imaging apparatus.

The iris includes a mirror device (16) comprising an array of tiltable micro mirrors and control means to position each micro mirror into either an active position for which the corresponding beam (22) is reflected towards the imaging surface (14) and an inactive position for which the light beam (20) is reflected outside the imaging surface. The aperture of the iris is determined by the area occupied by active micro mirrors or by the number of such active micro mirrors.

## Description

The invention relates to an iris for controlling the amount of light provided in an imaging apparatus. The invention concerns also an imaging apparatus having such iris.

An iris is generally used for controlling the light provided to the film of a camera or of a movie camera, or to the detector, such as CCDs, of a TV camera. It may be used also for controlling the light of image projectors.

Current irises are made of masking segments determining an opening having a section which is controllable by a motor through a gear mechanism. These current irises are heavy and have a high power consumption. In spite of these drawbacks, they are widely used in cameras and "camcorders", because no alternative solution is available. Anyway, it is clear that these drawbacks limit the possibility of miniaturization of portable cameras and camcorders.

Moreover, current irises have a relatively high response time which is also not favorable for the use in TV or movie cameras.

In order to reduce the weight and the power consumption and to decrease the response time, it has already been proposed an iris for a camcorder using a liquid crystal matrix. But, due to the fact that liquid crystals have a poor transmission coefficient, such iris has not been used up to now.

The invention provides an iris of small weight, small power consumption and small response time.

The iris according to the invention is characterized in that it comprises an array of tiltable micro mirrors for controlling the amount of light provided to a surface on which an image is formed such as a detector, a recording medium or a screen. "Recording medium" means here a film or any other medium on which pictures may be recorded.

The iris according to the invention is of the reflective type and departs from the conventional irises which are of the transmissive type.

Arrays of tiltable micro mirrors, such as digital mirror devices, are provided for instance by Texas Instruments Company. Such devices have, up to now, been used either for image projection or as shutters. A digital mirror device comprises an array of tiltable microscopic mirrors which can rotate of approximately ± 10 degrees. The rotation is generally controlled by electrostatic means. It can also be controlled by piezoelectric means.

Each mirror corresponds to a pixel. If a microscopic mirror is oriented in one direction, the corresponding pixel on the detector, or on the recording medium, receives light. If the microscopic mirror is oriented in the other direction, the detector, or recording medium, receives no light.

The length of the imaging apparatus having such a reflective iris can be shorter than the length of the corresponding apparatus having a transmissive conventional iris. In fact, in conventional film movie or TV cameras, the optical elements and the lens are along a straight optical axis between the objective lens and the film or detector, the iris being interposed on this path. On the contrary, with the invention using a reflective iris, the optical elements can be installed symmetrically with respect to the perpendicular to the common plane of the micro mirrors and, therefore, the global length can be smaller than with a conventional apparatus.

The micro mirrors are controlled in such a way that the amount of light provided to the recording medium or to the detector device depends on the area or on the number of active micro mirrors. By "active" micro mirrors, it is meant here mirrors which are oriented in such a way that they reflect the light to the recording medium or to the detector. Other micro mirrors are controlled in such a way that they are "passive", i.e. they reflect the light outside the recording medium or detector.

According to an embodiment of the invention, the micro mirrors are controlled in such a way that they reduce the effect of blurring on the imaging surface when the picture is not well focused on this imaging surface. In fact, it is known that when an image is out of focus, the aspect of the out of focus image depends on the shape of the iris. With the invention, it is possible to optimize this aspect by modifying the shape of the iris. It is also possible to modify the aspect of the out of focus image by a selection of the angles of some active micro mirrors, more particularly at the periphery. The shape of the iris and the selection of active micro mirrors and their angle can be determined experimentally during the development of the corresponding apparatus and the control can be implemented in the form of a program of a microprocessor in the apparatus.

It is to be noted here that, with the selective control of the angle of a microscopic mirror, the mirror device departs from a digital operation. As the mirrors may have more than two angular positions, this device operates in an analog way; however, in the present specification, the wording "digital" mirror device means a device operating digitally (2 angular positions for each mirror) or in an analog way (more than 2 angular positions for each mirror).

The invention provides an iris for controlling the amount of light in an imaging apparatus which comprises a mirror device comprising an array of tiltable micro mirrors and control means to position each micro mirror into either an active position for which the corresponding beam is reflected towards the imaging surface and an inactive position for which the light beam is reflected outside the imaging surface, the aperture of the iris being determined by the area occupied by active micro mirrors or by the number of such active micro mirrors.

In an embodiment, the mirror device is also used as a shutter, all the micro mirrors being in the inactive position when the mirror device has such a function of a shutter.

In an embodiment, means are provided to control the shape of the iris.

In this case, the shape of the iris may be controlled in order to minimize the effect of blurring of an image which is not well focused on the imaging surface.

In an embodiment, means are provided to control the direction of the reflected beam of each micro mirror in its active position.

Said means for controlling the direction of the reflected beam in the active position of each micro mirror may be used for minimizing the effect of blurring of an image which is not well focused on the imaging surface.

The iris of the invention may be used in an imaging apparatus which preferably comprises a case having an inner surface provided with means for minimizing the reflection or diffusion of light towards the imaging surface and received from the inactive micro mirrors.

The iris may be used in a camera, a movie camera, and a TV camera, more particularly of the portable type.

Other features and advantages of the invention will appear from the description of certain of its embodiments which are made in relation with the drawings in which:
- figure 1 shows schematically a camcorder according to the invention, and
- figure 2 represents a mirror device for the iris of the camcorder of figure 1.

The embodiment which will be described with the drawings concerns a portable TV camera currently called "camcorder".

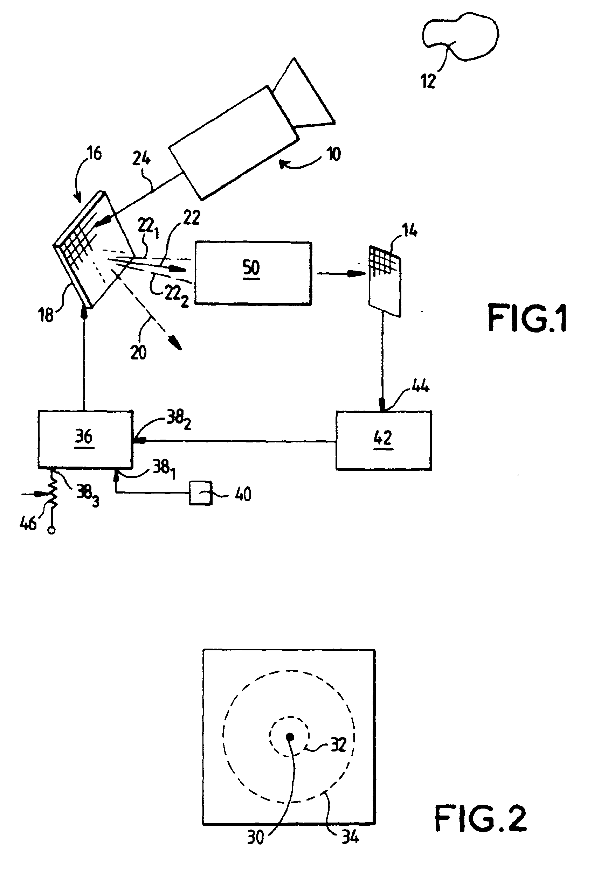

The camcorder represented on figure 1 comprises a conventional objective lens structure 10 which has the function to make an image of an object 12 or a landscape on an imaging device 14 usually formed of an array of "charge coupling devices" CCD.

The amount of light received by the CCDs 14 must not overcome a threshold. It is the reason why an iris 16 is provided between the lens structure 10 and the CCDs 14.

According to the invention, this iris 16 comprises a mirror device 18 and a corresponding control circuit.

The mirror device 18 comprises a plurality of microscopic mirrors and each microscopic mirror is controlled in such a way that it reflects light in at least two directions. One direction 20 is the inactive position of the micro mirror. In that case, the light is not reflected towards the CCDs 14. The other direction 22 is the active position, for which the light is directed towards the CCDs 14.

It can be noted here that the beam 24 impinging on the mirror device 18 and the useful beam 22 emerging from this device 18 are not on the same straight line and form a "folded" structure. Therefore, the total length of the structure can be smaller than the length of a rectilinear structure, as this is the case with a conventional camcorder having a transmissive iris.

As the inner surface of the case (not represented) of the camcorder receives stray beams having the direction 20, this inner surface must be treated in such a way that no stray light coming, directly or indirectly, from the passive mirrors will be reflected towards CCDs 14. Such optical treatment is conventional. It can consist in a blackening of a surface and/or in irregularities of this surface. This treatment is facilitated by the fact that the stray beams have generally the same direction 20.

The operation is as follows:

The number of micro mirrors which are put in the active position (i.e. which emit light in direction 22) is a function of the quantity of light which must be received by the CCDs 14 and, of course, of the quantity of light received by the lens structure 10. If the scene or object 12 is bright, the number of active mirrors will be small and, inversely, if the scene is relatively dark, the number of active micro mirrors will be greater.

In an embodiment represented on figure 2, the active micro mirrors are disposed around the center 30 of the substrate of device 18 and disposed in a circle. The diameter of this circle is the smallest when a maximum quantity of light is received by the lens structure 10 and is the greatest when the quantity of light received by structure 10 is minimum. The circle of minimum diameter has the reference 32 on figure 2 and the circle of maximum diameter has the reference 34 on this figure.

A mirror device controller 36 (figure 1) controls the micro mirrors. This controller has a first input 38₁ receiving the signal provided by a luminance sensor 40, and a second input 38₂ connected to the output of a signal processor 42 having an input 44 receiving a signal representing the luminance detected by the CCD 14. The controller 36 has a third input 38₃ receiving a signal from a manually operated generator 46.

The diameter of the circle of activated micro mirrors is either controlled automatically in view of the signals provided on inputs 38₁ and 38₂ or manually in view of the signal provided on input 38₃.

In an embodiment (not shown), the optical structure 10 is such that the beam 22 is directly imaged on CCDs 14 without any optical element between the device 18 and the CCDs 14. In the embodiment represented on figure 1, an optical structure 50 provided between the mirror device 18 and CCDs 14 contributes to the imaging of the object or scene 12 on the CCDs.

In a further embodiment, the controlling of the micro mirrors is such that at least some of these micro mirrors can be controlled in an analog way, i.e. these analog controlled micro mirrors may have more than two angular positions. More precisely, means are provided in order that, in the active state, each micro mirror can be tilted of a small angle around a central direction. In other words, the reflective beam 22 can be slightly tilted around a central direction. On figure 1, the central position has the reference 22 and the tilted directions have the reference 22₁ and 22₂.

This feature can be used for reducing the blurring caused by an image which is not well focused on CCDs.

For reducing the blurring, it is also possible to modify the shape of the iris by a corresponding control of the micro mirrors.

Apart from the fact that the camcorder comprising an iris according to the invention can present a smaller volume than a camcorder having a conventional transmissive iris, the iris according to the invention has a small response time, a high efficiency, a low consumption of energy and a long life time due to the fact that an electrostatic or piezoelectric device is used for controlling the tilt angle of the micro mirrors and not a motor like in conventional irises.

The mirror device 18 can also be used as a shutter, all micro mirrors being inactive in that case. For instance, in the camcorder, the micro mirrors are inactive between frames or images.

## Claims

1. Iris for controlling the amount of light in an imaging apparatus characterized in that it comprises a mirror device (16) comprising an array of tiltable micro mirrors and control means to position each micro mirror into either an active position for which the corresponding beam (22) is reflected towards the imaging surface (14) and an inactive position for which the light beam (20) is reflected outside the imaging surface, the aperture of the iris being determined by the area occupied by active micro mirrors or by the number of such active micro mirrors.

2. An iris according to claim 1, characterized in that the mirror device (18) is also used as a shutter, all the micro mirrors being in the inactive position when the mirror device has such a function of a shutter.

3. An iris according to claim 1 or 2, characterized in that means are provided to control the shape of the iris.

4. An iris according to claim 3, characterized in that the shape of the iris is controlled in order to minimize the effect of blurring of an image which is not well focused on the imaging surface.

5. An iris according to any of claims 1 to 4, characterized in that means are provided to control the direction of the reflected beam of each micro mirror in its active position.

6. An iris according to claim 5, characterized in that said means for controlling the direction of the reflected beam in the active position of each micro mirror are used for minimizing the effect of blurring of an image which is not well focused on the imaging surface.

7. An imaging apparatus comprising an iris according to any of the previous claims, characterized in that it comprises a case having an inner surface provided with means for minimizing the reflection or diffusion of light towards the imaging surface and received from the inactive micro mirrors.

8. Application of the iris according to any of the claims 1 to 6 to a camera, a movie camera, and a TV camera, more particularly of the portable type.
